# EUROPÄISCHE PATENTANMELDUNG

(11) **EP 2 695 666 A1**
(43) Veröffentlichungstag der Anmeldung: **12.02.2014**
(21) Anmeldenummer: 12179716.1
(22) Anmeldetag: 08.08.2012
(51) Int. Cl.: B01D 63/08, B01D 63/16, B01D 69/10

(54) **Filterelement**

(71) Anmelder: Grundfos Holding A/S, 8850 Bjerringbro (DK)
(72) Erfinder: Gadgaard, Bent, 8300 Odder (DK); Jensen, Jens Christian, 8850 Bjerringbro (DK)
(74) Vertreter: Patentanwälte Vollmann & Hemmer

(57) **Zusammenfassung**

Das Filterelement ist für einen Filterelementstapel vorgesehen und weist einen Tragkörper (4) auf, mindestens einen durchströmbaren Abstandhalter und einen diese abdeckende Filtermembran auf. Der Abstandhalter ist zumindest teilweise durch ein Gewirke von Kunststofffäden gebildet, das von eine Membran aus Kunststoffmaterial einseitig abgedeckt ist, mit der es fest verbunden ist und ein am Tragkörper (4) formschlüssig zu befestigendes Filtermaterial (8) bildet.

## Beschreibung

Die Erfindung betrifft ein Filterelement für einen Filterelementstapel mit den im Oberbegriff des Anspruchs 1 angegebenen Merkmalen.

Insbesondere zur Aufbereitung von Brauchwasser zählt es zum Stand der Technik dieses vorzugsweise durch rotierende Stapel von Filterelementen, insbesondere Filterplatten, strömen zu lassen, die typischerweise in einem geschlossenen Behälter angeordnet ist, bei dem das zu filternde Medium innerhalb des Behälters an der Außenseite der Filterelemente zugeführt wird, und das Filtrat durch die Filterelemente in der Regel zentral durch eine Welle oder mehrere durch den Filterelementstapel laufende Kanäle abgezogen wird. Dabei ist es in regelmäßigen Abständen erforderlich, die Filterelemente zu reinigen, um zu verhindern, dass sich diese dauerhaft zusetzen. Dies kann durch mechanische Abstreifer und/oder Rückspülung erfolgen.

Unabhängig davon, wie die Reinigung der Filterelemente erfolgt, sind diese nach einer gewissen Standzeit zu ersetzen, es handelt sich also um Verschleißartikel. Es ist daher ein grundlegendes Problem, diese Filterelemente möglichst kostengünstig herstellen zu können. Besonders kostengünstig sind dabei die aus EP 1 807 184 B1 bekannten Filterelemente, die vollständig aus Kunststoff bestehen, und bei denen zwischen zwei Filtermembranen durch ein Gewebe ein Freiraum zum Abzug des Filtrates gebildet ist. Diese Filterelemente sind zwar kostengünstig in der Herstellung, in der Praxis jedoch nur bedingt brauchbar, da konstruktionsbedingt eine Rückspülung nur mit vergleichsweise geringem Druck erfolgen kann und darüber hinaus auch eine Rotation des aus solchen Filterelementen aufgebauten Filterelementstapels aufgrund nur geringer Eigenstabilität der Filterelemente problematisch ist.

Insoweit günstiger sind beispielsweise die aus EP 2 002 874 B1 bekannten Filterscheiben, bei welchen die Membran aus einem keramischen Werkstoff besteht und zwei Membranen über einen dazwischenliegenden Tragkörper miteinander verbunden sind, der zugleich die Keramikschreiben im Abstand zueinander hält und Freiraum für Durchströmung bietet. Derartige Filterelemente haben zwar hohe Standzeiten, da sie mit hohen Drücken rückgespült werden können, sind jedoch vergleichsweise teuer in der Herstellung.

Vor diesem Hintergrund liegt der Erfindung die Aufgabe zugrunde, ein Filterelement zu schaffen, das einerseits kostengünstig in der Herstellung ist und andererseits eine möglichst hohe Standzeit aufweist.

Dieser Aufgabe wird gemäß der Erfindung durch ein Filterelement mit den in Anspruch 1 angegebenen Merkmalen gelöst. Vorteilhafte Ausgestaltungen der Erfindung sind in den Unteransprüchen, der nachfolgenden Beschreibung und der Zeichnung angegeben.

Das erfindungsgemäße Filterelement für einen Filterelementstapel weist einen Tragkörper und mindestens einen durchströmbaren Abstandhalter sowie mindestens eine Filtermembran auf, wobei der Abstandhalter zumindest teilweise durch ein Gewebe oder Gewirke von Kunststofffäden gebildet ist und die Membran ebenfalls aus Kunststoffmaterial gebildet ist.

Grundgedanke der vorliegenden Erfindung ist es, ein Filterelement so aufzubauen, dass es einerseits kostengünstig herstellbar ist, jedoch andererseits die vorerwähnten Nachteile hinsichtlich der Standzeit nicht aufweist. Das erfindungsgemäße Filterelement weist hierzu einen Tragkörper auf, der dem gesamten Filterelement seine Formstabilität verleiht und der insbesondere den mindestens einen durchströmbaren Abstandhalter und die darauf angeordnete Membran aus Kunststoffmaterial abstützt, sodass diese mit genügend hohen Drücken rückspülbar sind und das Filterelement eine hohe Eigenstabilität aufweist, welche es erlaubt, zum einen flächig größere Filterelemente zu verwenden, zum anderen diese zusammen mit dem gesamten Stapel zu rotieren. Dabei ist der verwendete Tragkörper vorteilhaft ebenfalls aus Kunststoff gebildet, wobei die Verbindung zwischen Tragkörper und Gewebe oder Gewirke sowie Gewebe oder Gewirke und Membran vorteilhaft jeweils stoffschlüssig erfolgt.

In einfachster Form kann der Tragkörper durch eine Scheibe beliebiger Form gebildet sein, auf welcher die beispielsweise einteilige Filtermembran unter Einschluss des Abstandhalters als durchströmbare beispielsweise einteilige Zwischenlage angeordnet ist. Dabei ist das Gewebe oder Gewirke vorteilhaft durch Kleben mit der Scheibe fest verbunden und die Filtermembran mit dem den Abstandhalter bildenden Gewebe oder Gewirke. Vorteilhafterweise ist die Scheibe kreisrund oder abgerundet polygonförmig ausgebildet.

Alternativ kann der Tragkörper vorteilhaft auch skelettartig aufgebaut und in seinen Freiraumen mit Gewebe oder Gewirke von Kunststofffäden ausgefüllt sein. Es ergibt sich dann beispielsweise ein Tragkörper in Form eines Speichenrads, wobei das den Abstand der Membran haltende Gewebe oder Gewirke in den Zwischenräumen zwischen den Speichen und zur einen oder gegebenenfalls auch zu beiden Seiten der Speichen angeordnet und mit einer Kunststoffmembran abgedeckt ist.

Ein solcher skelettartig aufgebauter Tragkörper wird vorteilhaft durch einen umfänglichen Ring gebildet, welcher Stege aufweist, die vorzugsweise radial nach innen gerichtete Speichen sind. Die Stege können jedoch alternativ auch parallel zueinander mit Abstand oder gitterartig angeordnet sein, wobei die Freiräume mit Gewirke von Kunststofffäden ausgefüllt sind. Vorteilhaft weist der Tragkörper eine zentrale Ausnehmung mit Formschlussmitteln zur unmittelbaren oder mittelbaren drehfesten Anordnung auf einer Welle auf, um zusammen mit der den Stapel durchsetzten Welle rotierbar zu sein. Das von der Welle aufgebrachte Drehmoment wird auf den Tragkörper und von diesem flächig auf die übrigen Bauteile des Filterelementes übertragen, dabei sorgt der Tragkörper selbst für die Eigenstabilität des Filterelements.

Besonders vorteilhaft ist es, wenn der Tragkörper nicht direkt mit der Welle verbunden wird sondern ein Innenring vorgesehen ist, der mit Formschlussmitteln zur unmittelbaren oder drehfesten Anordnung auf einer Welle vorgesehen ist und andererseits in die zentrale Ausnehmung des Tragkörpers eingreift, mit dem er drehfest verbunden ist. Ein solcher Innenring wird gemäß einer weiteren vorteilhaften Ausgestaltung der Erfindung durch zwei vorzugsweise identische geschlossene Ringteile gebildet, welche unter Einschluss von Teilen des Filterelements sowie des Tragkörpers miteinander verbunden sind. Diese Ringteile sind vorteilhaft als Kunststoffspritzgussteile ausgebildet und daher besonders kostengünstig herstellbar, wenn diese identisch in ihrer Form sind. Dabei sind diese zweckmäßigerweise so ausgebildet, dass sie miteinander klippbefestigbar sind, d. h. nach Überwinden einer Anfangskraft formschlüssig ineinandergreifen und dadurch miteinander verbunden werden.

Vorteilhaft weist ein solcher Innenring mindestens eine radial nach innen gerichtete Stützfläche zur Abstützung an einer zentralen Welle auf. Vorteilhaft sind in gleichem Winkelabstand um die Welle herum Stützflächen angeordnet, sodass über den Wellenumfang eine gleichmäßig verteilte Abstützung erfolgt. Dabei muss die Drehmomentübertragung von der Welle auf das Filterelement nicht über diese Stützflächen erfolgen, vorteilhaft erfolgt dies im Bereich der Stützringe radial weiter außen, um auf diese Weise bei gleicher Materialdicke größere Kräfte übertragen zu können. Dabei dient der Innenring nicht nur zur Übertragung der Drehkräfte sondern ist vorteilhaft auch kanalbildend ausgestaltet. Hierzu weist der Innenring mindestens eine Querausnehmung auf, welche Teil eines Kanals bildet, über welchen die Filtratabfuhr erfolgt. Zweckmäßigerweise ist dabei die Querausnehmung so ausgestaltet, dass einerseits ein dichtes Innenlumen für den Kanal gebildet ist, welche zum Inneren des Filterelements geöffnet ist und andererseits hierüber auch die Drehmomentübertragung erfolgt. Dabei sind vorteilhaft eine oder mehrere Querausnehmungen im Innenring so angeordnet und ausgebildet, dass zwischen aneinander liegenden Filterelementen eines Filterelementstapels ein Kanal oder Kanäle zur Filtratabfuhr gebildet sind. Diese vorteilhaft identisch ausgebildeten Innenringe bilden dann im Stapel ein etwa rohrförmiges Gebildet zwischen einer zentralen Welle und den umgebenden Tragkörpern mit Abstandhaltern und Filtermembranen, welches zur Abstützung der Filterelemente auf der Welle, zur Übertragung des Drehmomentes in den gesamten Filterelementstapel sowie zur Filtratabfuhr dient. Dabei sind im Bereich der Kanäle vorteilhaft O-Ringe oder andere Dichtmittel vorgesehen, welche dafür sorgen, dass die aneinander liegenden Innenringe benachbarter Filterelemente dichte Kanäle bilden, durch welche das Filtrat abgezogen werden kann.

Um eine gute Durchströmbarkeit einerseits und ausreichende Haltefunktion hinsichtlich des Abstands andererseits zu gewährleisten ist das Gewebe oder Gewirke vorteilhaft durch in Schlaufen angeordnete Kunststofffäden gebildet, die vorzugsweise stoffschlüssig mit der Membran und/oder dem Tragkörper verbunden sind. Dabei ist es besonders vorteilhaft, wenn der Stoffschluss durch Material erfolgt, aus welchem auch die Membran besteht, welches vorteilhaft zum Tragkörper hin flächig und dicht anschließt, sodass beim Rückspülen kein Druckaufbau zwischen Tragkörper und diesem Material erfolgen kann.

Fertigungstechnisch besonders günstig ist es, wenn das den Abstandhalter bildende Gewebe oder Gewirke mit der darüber liegenden Membran und die Klebschicht zur Verbindung mit dem Tragkörper als aufwickelbares Band hergestellt werden, die dann nach entsprechendem Zuschnitt nur noch auf den Tragkörper einseitig oder gegebenenfalls auch beidseitig aufgeklebt werden. Bei einer solchen Anordnung erfolgt die Abdichtung nach Innen durch die vorbeschriebenen Innenringe. Nach außen hingegen ist eine weitere Abdichtung erforderlich, die vorteilhaft mittels eines umfänglichen Dichtrings erfolgt. D. h. dass am Außenumfang des oder der Stützkörper mindestens einer oder gegebenenfalls auch mehrere Dichtringe angeordnet sind, welche für eine radiale Abdichtung in diesem Bereich sorgen. Eine solche Dichtung kann vorteilhaft durch eine Polyurethanschicht gebildet werden.

Das den Abstandhalter und kanalbildende Gewebe oder Gewirke kann aus diversen Kunststoffmaterialien hergestellt werden. Besonders vorteilhaft ist es jedoch, dieses aus monofilen Kunststofffäden aus Nylon oder Polyester herzustellen, vorzugsweise mit einer Dicke von 0,1 bis 0,2 mm da dies einerseits eine kostengünstige Herstellung, andererseits eine gute Durchströmbarkeit und schließlich eine ausreichende Abstandshaltefunktion erfüllen kann.

Unter Gewebe im Sinne der vorliegenden Erfindung wird auch Gestrick, Gehäkel oder andere regelmäßige Verbindungen von Kunststofffäden verstanden, unter Gewirke jede unregelmäßige Verbindung von Kunststofffäden.

Bei dem kanalbildenden Gewebe oder Gewirke im Sinne der vorliegenden Erfindung handelt es sich vorteilhaft um ein 3D-Abstandshaltematerial, das vorzugsweise durch Stricken hergestellt ist, z. B. auf einer Raschel Strickmaschine. Es ist dabei so ausgebildet, dass es innerhalb der Erstreckungsrichtung des Gewebes im Wesentlichen durchlaufende Kanäle und in Querrichtung dazu teilweise unterbrochene Kanäle bildet, wobei an der Ober- und Unterseite Flächen gebildet sind, die zur flächigen, vorzugsweise stoffschlüssigen Verbindung mit weiteren Lagen geeignet ist, die so gestaltet sind, dass die darunter liegenden Kanäle/Freiräume ausreichend abgestützt sind und eine ausreichend große Verbindungsfläche gegeben ist. Es wird in diesem Zusammenhang insbesondere auf EP 1 807 184 B1 Absatz 0045 verwiesen, wo der Aufbau eines solchen Gewebes im Einzelnen beschrieben ist

Die Membran wird vorteilhaft aus PES und PVP oder PVDF hergestellt. Es wird in diesem Zusammenhang auch auf EP 1 807 184 B1 verwiesen, wo geeignete Materialien zur Bildung von Gewirke und Membran angegeben sind.

Die Erfindung ist nachfolgend anhand eines Ausführungsbeispiels näher erläutert. Es zeigen:
- Fig. 1: in stark vereinfachter schematischer perspektivischer Darstellung einen aus Filterelementen aufgebauten Filterelementstapel,
- Fig. 2: in perspektivischer Ansicht ein Filterelement gemäß der Erfindung,
- Fig. 3: die Einzelheit III der Fig. 2 in vergrößerter Darstellung,
- Fig. 4: den Filterelementstapel nach Fig. 1 in Teilexplosionsdarstellung,
- Fig. 5: in Explosionsdarstellung den Aufbau einer Filterelementes und
- Fig. 6: den Aufbau von Membran und Gewebe als Band.

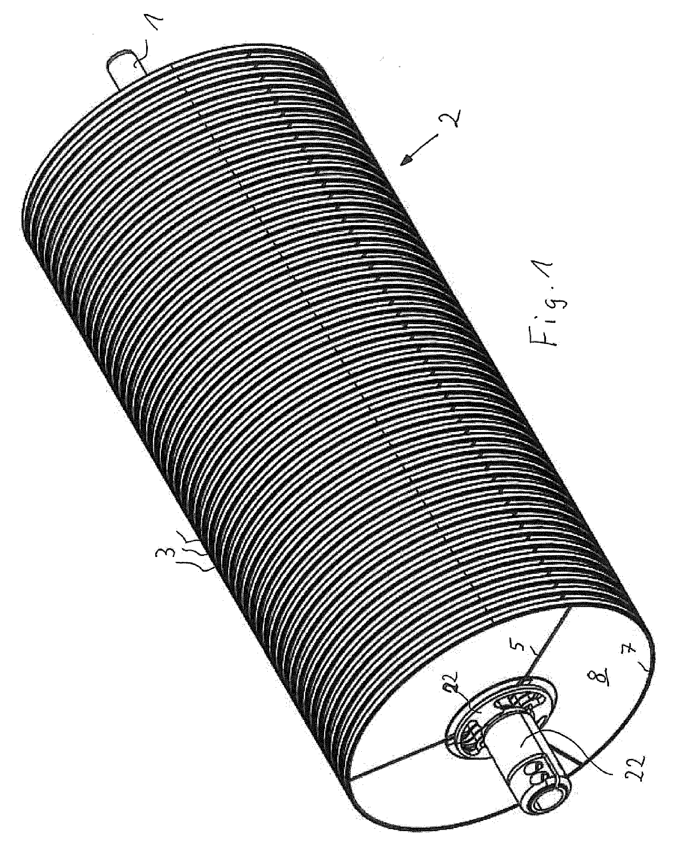

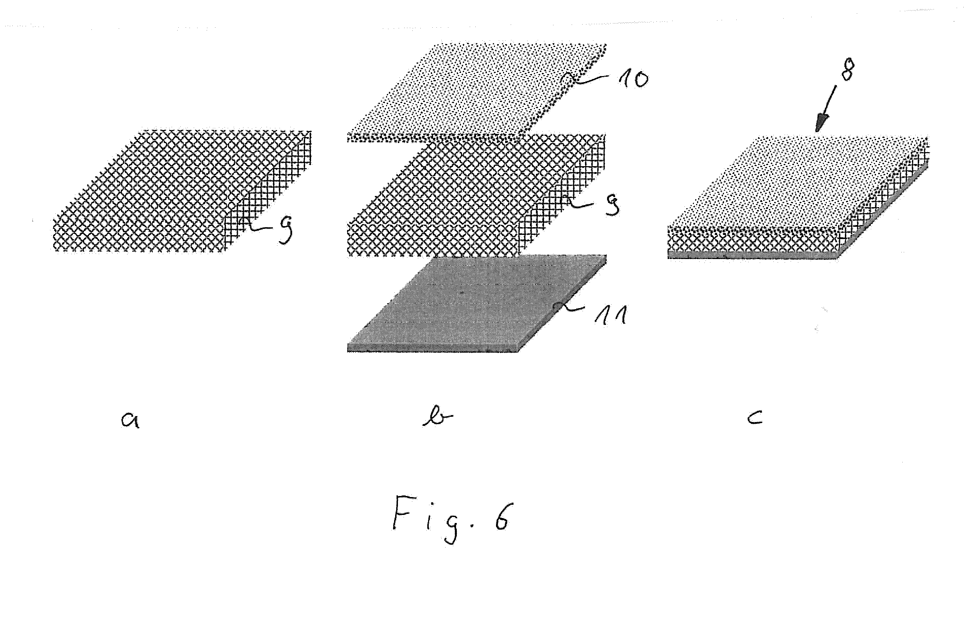

Bei dem in Fig. 1 dargestellten aus Filterelementen 3 aufgebauten Filterelementstapel 2 handelt es sich um einen solchen, wie er typischerweise in einem geschlossenen zylinderförmigen Behältnis eingesetzt ist, bei dem zu filtrierende Wasser in das Behältnis eingeleitet wird, sodass es den Plattenstapel 2 umgibt. Der Filterplattenstapel 2 ist dabei auf einer zentralen Welle 1 angeordnet, die über einen meist externen Antrieb rotierbar ist. Die Abfuhr des Filtrates erfolgt bei einem solchen Stapel 2 typischerweise zentral entweder durch eine hole Welle oder wie bei der vorliegenden Ausbildung durch um die Welle 1 herum angeordnete Kanäle 19. Ein Filterelement 3 hat im Wesentlichen eine kreisrunde scheibenförmige Form und weist einen stabilen Tragkörper 4 aus Kunststoff auf, der die Form einer ringförmigen Scheibe hat, welche an einer Seite mit drei radialen Rippen 5 versehen ist, die sich von einer zentralen Ausnehmung 6 radial bis zu einem umlaufenden Rand 7 erstrecken. Diese Rippen 5 sind zu beiden Seiten des scheibenförmigen Teils des Tragkörpers 4 angeordnet und erstrecken sich von einer zentralen Ausnehmung 6 bis zu dem umlaufenden Rand 7, der die Rippen 5 jedoch in Achsrichtung des Stapels gesehen überragt, also höher als die Rippen 5 gegenüber dem scheibenförmigen Teil ausgebildet ist. Der umlaufende Rand 7 in Verbindung mit den Rippen 5 bildet einen Rahmen zur Aufnahme von Ringsegmenten des entsprechend passend zugeschnittenen Filtermaterials 8, dessen Aufbau in der Figur 6c dargestellt ist.

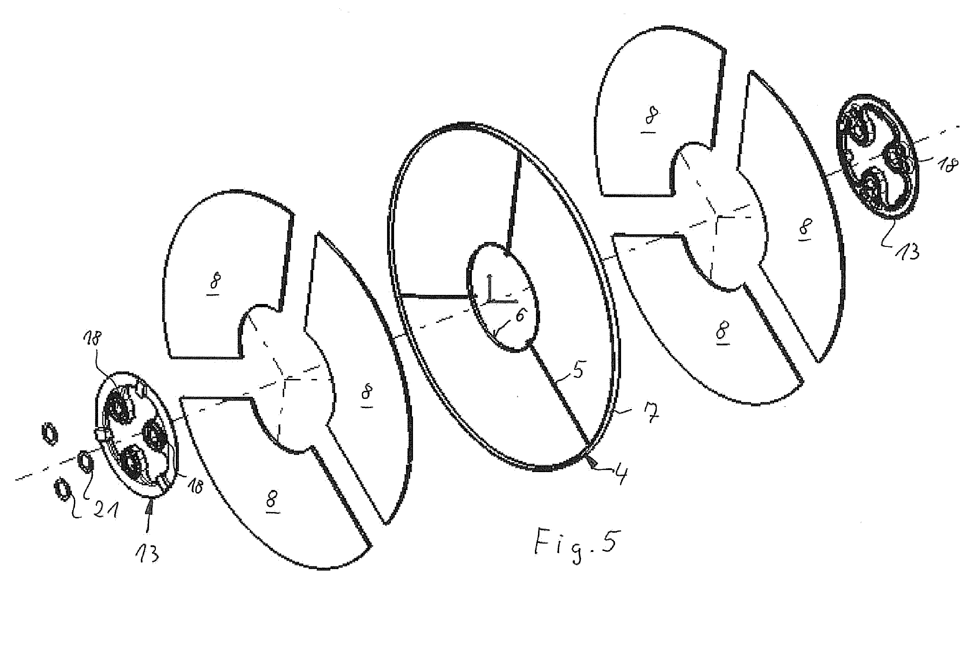

Dieses Filtermaterial 8, welches als Band hergestellt wird, besteht aus einem kanalbildenden Gewebe 9 oder Gewirke von Kunststofffäden, welches an einer Seite mit einer Filtermembran 10, welche aus Kunststoff besteht, stoffschlüssig, d. h. fest und zerströrungsfrei nicht lösbar verbunden ist und an der anderen Seite eine ebenfalls fest damit verbundene Klebschicht 11 aufweist, welche zur flächigen, lückenlosen und dauerhaften Verklebung mit dem scheibenförmigen Teils des Tragkörpers 4 dient. Aus diesen in Fig. 6c dargestellten Filtermaterial 8 werden also entsprechende Ringsegmente ausgestanzt, wie sie in Fig. 5 dargestellt sind, die dann in die durch Rippen 5 und Rand 7 gebildeten Rahmen eingelegt und mit dem scheibenförmigen Teil des Tragkörpers 4 fest und flächig durch Kleben verbunden werden. Dabei sorgt das Gewebe 9 dafür, dass die Filtermembran 10 in einem ausreichenden Abstand zu dem scheibenförmigen Teil des Tragkörpers 4 angeordnet bleibt, sodass durch die Membran 10 einströmende Flüssigkeit durch das kanalbildende Gewebe 9 mit geringem Widerstand hindurchfließen kann.

Ein Tragkörper 4 ist also mit sechs Segmenten von Filtermaterial 8 verklebt, sodass sich zu beiden Seiten Filteranordnungen ergeben, bei denen die Membran 10 von außen nach innen durchströmbar ist. Alternativ kann hierzu auch vorgesehen sein, den Tragkörper 4 nur einseitig mit Filtermaterial 8 zu belegen.

Das Filtermaterial 8 ist hinsichtlich seiner Dicke an die Höhe des Randes 7 angepasst, schließt also bündig mit diesem ab. Zur Abdichtung kann gegebenenfalls im Bereich zwischen dem Rand 7 und dem Filtermaterial 8 eine Abdichtung vorgesehen sein, beispielsweise durch Einspritzen von Polyurethan in diesen Bereich, um sicherzustellen, dass zwischen Filtermembran 10 und Rand 7 keine Flüssigkeit hindurchdringen kann. Dies ist insbesondere beim Rückspülen wichtig, wenn zur Reinigung des Filterelementes 3 eine Druckbeaufschlagung und Durchströmung in umgekehrter Richtung, also von innen nach außen erfolgt.

Das auf den Tragkörper 4 geklebte Filtermaterial 8 bildet einen eigenstabilen Körper mit diesem. Um diesen in der gewünschten Weise in einen Filterelementstapel 2 einzugliedern, welcher die Rotation der Welle 1 auf das Filterelement 2 überträgt, für die Abfuhr des Filtrates geeignete Mittel aufweist und die Filterelemente 3 in dem erforderlichen Abstand zueinander hält, ist jeweils ein Innenring 12 vorgesehen, welcher formschlüssig innerhalb der Ausnehmung 6 des mit Filtermaterial 8 bestückten Tragkörpers 4 festgelegt ist.

Jeder Innenring 12 besteht aus zwei identischen geschlossenen Ringteilen 13, die jeweils einen die Ausnehmung 6 überragenden flanschartigen Rand 14 aufweisen. Auf dem Rand 14 sind drei um 120° verteilte rechteckige Erhebungen 15 angeordnet, welche höhemäßig so dimensioniert sind, dass sie den Abstand benachbarter Filterelemente 3 auf der Welle 1 in der gewünschten Weise vorgeben. Diese Erhebungen 15 sind radial nach innen über den Rand 14 hinaus geführt und dort als Klippverbindung gestaltet, sodass beim Zusammenfügen zweier Ringteile 13 unter Einschluss des beidseitig mit Filtermaterial 8 bestückten Tragkörpers 4 die Ränder 14 dieser Ringteile 13 dicht am Filtermaterial 8 anliegen und die gesamte Ringscheibe fest und zerstörungsfrei unlösbar miteinander verbunden ist. Alternativ können Filterelemente auch durch scheibenförmige Tragkörper gebildet sein, die vollflächig (ohne Rippen) mit Filtermaterial belegt sind.

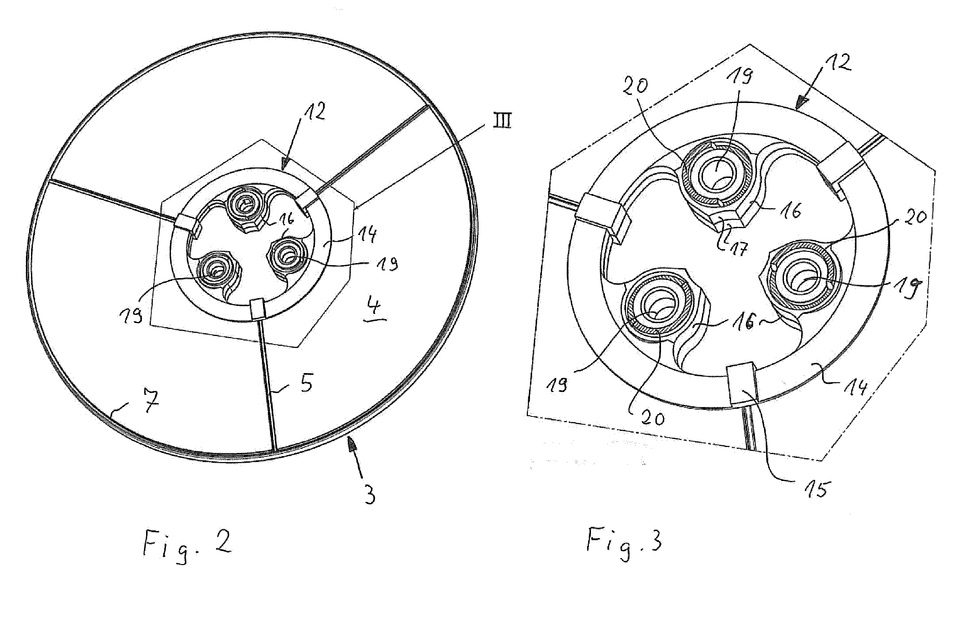

Der Innenring 12 bzw. die zwei miteinander verbundenen Ringteile 13 weisen drei vom Rand 14 nach innen gerichtete Vorsprünge 16 auf, deren radial nach innen gerichtete Flächen 17 Stützflächen bilden, welche sich unmittelbar an der Welle 1 abstützen. Diese Stützflächen 17 sind daher entsprechend der Krümmung der Welle 1 teilzylindrisch geformt, wie dies aus Fig. 3 besonders deutlich hervorgeht.

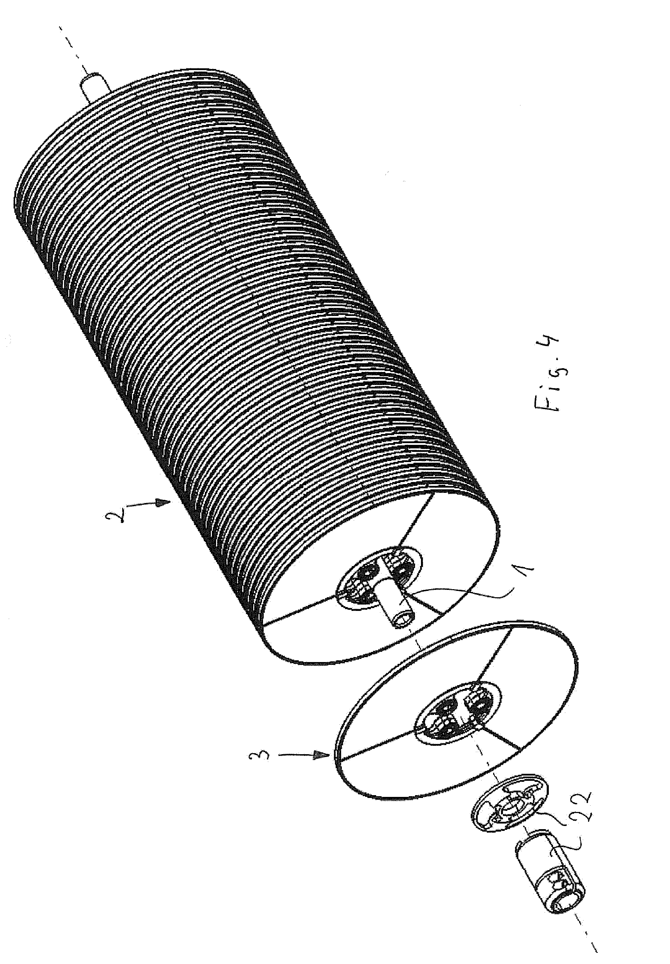

Innerhalb dieser Vorsprünge 16 sind Ausnehmungen 18 vorgesehen, welche radial nach außen hin, also im Bereich unterhalb des Randes 14 durchbrochen, das heißt offen ausgebildet sind, sodass die durch die Filtermembran 10 in das Filterelement 3 eindringende Flüssigkeit durch das Gewebe 9 radial nach innen in die Ausnehmungen 18 gelangen kann. Im Übrigen sind die Ausnehmungen 18 rohrförmig begrenzt, sodass nicht nur die miteinander verbundenen Ringteile 13 eines Filterelementes 3 parallel zur Welle 1 verlaufende Kanäle 19 bilden, sondern auch aneinander liegende Innenringe 12 eines Filterelementstapels 2. Hierzu sind die Ausnehmungen 18 an einer Seite der Ringteile 13, und zwar auf der Seite, auf der die Erhebungen 15 ausgebildet sind, mit Abstand zu den Ausnehmungen 18 mit halbringförmigen Erhebungen 20 versehen, die so angeordnet und ausgebildet sind, dass die halbringförmigen Erhebungen 20 benachbarter Innenringe 12 von im Stapel 2 nebeneinander liegender Filterelemente 3 jeweils eine kreisförmige Erhebung bilden, in die jeweils ein O-Ring 21 eingegliedert werden kann, welcher dafür sorgt, dass die Kanalabschnitte benachbarter Innenringe 12 dicht miteinander verbunden sind und Kanäle 19 bilden, die sich über die gesamte Länge des Filterelementstapels 2 erstrecken, deren Enden in eine gemeinsame Leitung führen, über welche das Filtrat abgezogen wird bzw. die Flüssigkeit für die Rückspülung zugeführt wird. Diese halbringförmigen Erhebungen 20 verbinden zudem benachbarte Innenringe 12 von im Stapel 2 benachbart nebeneinander angeordneten Filterelementen 3 derart formschlüssig, dass hierüber die Drehmomentübertragung innerhalb des Stapels erfolgt. Die Drehmomentübertragung von der zentralen Welle 1 auf den Filterelementstapel erfolgt mittels einer Kupplung 22, die in den Figuren 1 und 4 sichtbar ist. Diese Ausbildung hat den Vorteil, dass eine kostengünstig im Querschnitt kreisrunde Welle 1 eingesetzt werden kann, die Filterelemente 3 in einfacher Weise auf die Welle 1 aufgeschoben werden können und lediglich untereinander formschlüssig drehfest miteinander verbunden sind. Die drehfeste Verbindung zur Welle erfolgt durch die Kupplung 22, die erst am Ende des Montagevorgangs aufgesetzt wird.

### Bezugszeichenliste

- 1: Welle
- 2: Filterelementstapel
- 3: Filterelement
- 4: Tragkörper
- 5: Rippen
- 6: Ausnehmung
- 7: Rand
- 8: Filtermaterial
- 9: Gewebe
- 10: Filtermembran
- 11: Klebschicht
- 12: Innenring
- 13: Ringteile
- 14: flanschartiger Rand
- 15: Erhebungen
- 16: Vorsprünge
- 17: Stützflächen
- 18: Ausnehmungen
- 19: Kanal
- 20: halbringförmige Erhebungen
- 21: O-Ringe
- 22: Kupplung

## Patentansprüche

1. Filterelement für einen Filterelementstapel mit einem Tragkörper (4), mit mindestens einem durchströmbaren Abstandhalter (9) und mit mindestens einer Filtermembran (10), **dadurch gekennzeichnet, dass** der Abstandhalter zumindest teilweise durch ein Gewebe oder Gewirke (9) von Kunststofffäden gebildet ist und das die Membran (10) aus Kunststoffmaterial gebildet ist.

2. Filterelement nach Anspruch 1, **dadurch gekennzeichnet, dass** der Tragkörper (4) durch eine Scheibe gebildet ist, auf welcher die Filtermembran (10) unter Einschluss des Abstandhalters (9) als durchströmbare Zwischenlage angeordnet ist.

3. Filterelement nach Anspruch 1, **dadurch gekennzeichnet, dass** der Tragkörper (4) skelettartig aufgebaut und in Freiräumen mit Gewebe oder Gewirke (9) von Kunststofffäden ausgefüllt ist

4. Filterelement nach Anspruch 3, **dadurch gekennzeichnet, dass** der Tragkörper (4) einen umfänglichen Ring (14) mit Stegen, vorzugsweise radial nach innen gerichteten Speichen (5) aufweist.

5. Filterelement nach einem der vorhergehenden Ansprüche, **dadurch gekennzeichnet, dass** der Tragkörper (4) eine zentrale Ausnehmung (6) mit Mitteln (12) zur unmittelbaren oder mittelbaren drehfesten Anordnung auf einer Welle (1) aufweist.

6. Filterelement nach einem der vorhergehenden Ansprüche, **dadurch gekennzeichnet, dass** ein Innenring (12) vorgesehen ist, der mit Formschlussmitteln zur unmittelbaren oder mittelbaren drehfesten Anordnung auf einer Welle (1) vorgesehen ist.

7. Filterelement nach Anspruch 6, **dadurch gekennzeichnet, dass** der Innenring (12) durch zwei vorzugsweise identische Ringteile (13) gebildet ist, die unter Einschluss von Teilen des Filterelements (3) miteinander verbunden sind.

8. Filterelement nach Anspruch 6 oder 7, **dadurch gekennzeichnet, dass** der Innenring (12) mindestens eine radial nach innen gerichtete Stützfläche (17) zur Abstützung an einer zentralen Welle (1) aufweist.

9. Filterelement nach einem der vorhergehenden Ansprüche, **dadurch gekennzeichnet, dass** der Innenring (12) mindestens einen Kanal aufweist, der den zwischen Membran (10) und Tragkörper (4) gebildeten Innenraum mit mindestens einer Querausnehmung (18) zur Filtratabfuhr verbindet.

10. Filterelement nach Anspruch 9, **dadurch gekennzeichnet, dass** eine oder mehrere Querausnehmungen (18) im Innenring (12) so angeordnet und ausgebildet sind, dass zwischen aneinander liegenden Filterelementen (3) eines Filterelementstapel ein Kanal (19) oder Kanäle (19) zur Filtratabfuhr gebildet sind.

11. Filterelement nach einem der vorhergehenden Ansprüche, **dadurch gekennzeichnet, dass** das Gewebe oder Gewirke (9) in Schlaufen angeordnete Kunststofffäden aufweist, die vorzugsweise stoffschlüssig mit der Membran (10) und/oder dem Tragkörper (4) verbunden sind.

12. Filterelement nach einem der vorhergehenden Ansprüche, **dadurch gekennzeichnet, dass** der oder die Stützkörper (4) an ihrem Außenumfang vorzugsweise mittels eines Dichtrings abgedichtet sind.

13. Filterelement nach einem der vorhergehenden Ansprüche, **dadurch gekennzeichnet, dass** die das Gewebe oder Gewirke (9) bildendenden Kunststofffäden aus Nylon oder Polyester vorzugsweise in einer Dicke von 0,1 bis 0,2 mm bestehen.

14. Filterelement nach einem der vorhergehenden Ansprüche, **dadurch gekennzeichnet, dass** die Membran (10) aus PES und PVP oder PVDF besteht.
